# EUROPEAN PATENT SPECIFICATION

(11) **EP 2 309 125 B1**
(45) Date of publication and mention of the grant of the patent: **13.04.2016**
(21) Application number: 10013342.0
(22) Date of filing: 06.10.2010
(51) Int. Cl.: F03D 80/00

(54) **AUXILIARY REFRIGERATION SYSTEM AND OPERATING METHOD**
HILFSKÜHLUNGSSYSTEM UND BETRIEBSMETHODE
SYSTÈME DE RÉFRIGÉRATION AUXILIAIRE ET MÉTHODE D'EXPLOITATION

(30) Priority: 09.10.2009 ES 200901982
(43) Date of publication of application: 13.04.2011
(73) Proprietor: Gamesa Innovation & Technology, S.L., 31621 Sarriguren (ES)
(72) Inventor: Alcalde Ayala, Ricardo, 31621 Sarriguren (ES); Brito Garcia, Carlos, 31621 Sarriguren (ES)

(56) References cited:
- EP-A1- 2 453 134
- WO-A1-2008/142947
- WO-A2-2008/131766
- WO-A2-2009/049599
- CN-A- 101 196 176

## Description

### Object of the invention

The object of the invention is to refrigerate a wind turbine's gearbox by means of an auxiliary system when the main refrigeration equipment fails due to bad weather conditions.

### Background of the Invention

Wind turbines are machines that are installed in all types of locations and are subjected to hard external conditions. Thus, in locations with low temperatures, the viscosity of the gearbox's oil increases to the point that solidified oil lumps are formed. The optimal place for the oil to solidify is in the refrigeration equipment which is in contact with the outside. When the main refrigeration system fails owing to partial solidification of the oil used for refrigeration, problems arise with the temperature reached by the gearbox, the relevant alarm goes off and the wind turbine is stopped.

During normal operation, the gearbox oil goes through the main refrigeration system, which refrigerates it as needed. As is well known, the oil's viscosity increases inversely and exponentially with temperature. The loss of charge of the viscous fluid going through the refrigeration equipment depends linearly on the viscosity; with low temperatures, half-solidified oil lumps are formed and the gearbox oil no longer flows through the main refrigeration equipment.

To avoid the consequences of a lack of gearbox refrigeration, auxiliary exchangers are used to refrigerate the gearbox when needed.

Patent CN 101196176 takes into account the problems caused by low temperatures and uses an auxiliary exchanger that preheats the oil used in the main refrigeration system so that it can be impelled by the pump. This is not the best possible solution, as the amount of heat that needs to be applied to the oil in the main refrigeration system requires the use of an excessively large (which makes its location inside the nacelle difficult) and costly preheater.

Patent WO2008131766 also uses an auxiliary preheater to exchange heat with the main refrigeration system when the latter suffers the consequences of low temperatures and increased oil viscosity. The design shown in this patent prevents excessive oil refrigeration, so that the circuit is not blocked, but does not take into account the possibility of blockage following an extended stoppage of the wind turbine. Because with the wind turbine stopped, none of the heat exchange circuits work, and they may become blocked at low temperatures.

In view of the above, it is believed that none of the known patents solves the gearbox refrigeration problem in such a way that the machine's performance at low temperatures is improved simply, within the space existing inside the nacelle, and cost-effectively.

### Description

One object of this invention is to install an interior auxiliary exchanger applied directly to the gearbox for its refrigeration, which starts operating when the main refrigeration equipment has failed due to the low temperatures existing outside the wind turbine.

Another object of this invention is to establish the necessary mechanical connections between the auxiliary exchanger and the gearbox, so as to prevent the gearbox oil from reaching the maximum operating temperature and enable the machine to be stopped.

Another object of the invention is to establish the appropriate electrical circuit between the auxiliary exchanger, the main refrigeration equipment and the gearbox, in order to achieve the oil's refrigeration.

And finally, another object of the invention is to establish the control method to be followed for determining the failure in the main refrigeration equipment and the activation of the auxiliary exchanger, managing the response and the connection and disconnection of the auxiliary exchanger while awaiting for the main refrigeration equipment's operation to be restored.

### Brief description of the drawings

Figure 1 shows a schematic representation of the main refrigeration equipment, the gearbox and the auxiliary exchanger.
Figure 2 depicts a hydraulic diagram of the components mentioned in the preceding figure.
Figure 3 illustrates a detail of the auxiliary exchanger's mechanical diagram and its connection to the gearbox and the refrigeration equipment.
Figure 4 represents a block diagram with the control logic for the different temperatures checked.

### Description of the preferential embodiment

The gearbox is a component that is installed between the mechanical transmission system, or drive train, of a wind turbine and the electrical generator, given that the turbine's rotation speed does not usually match the generator's speed. This mechanical component needs to be refrigerated.

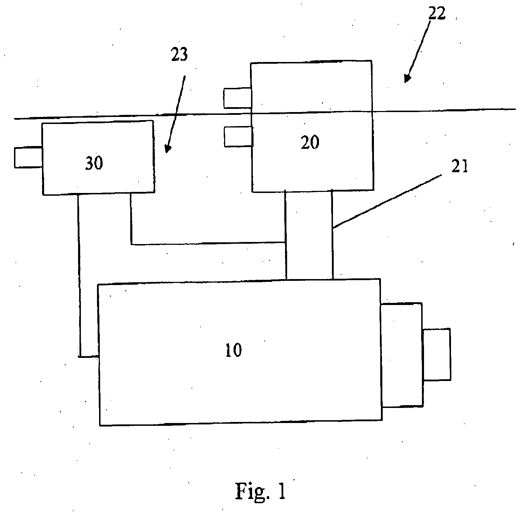

As shown in Figure 1, the gearbox (10) is refrigerated by means of a main refrigeration system (20) with a direct connection (21) between both components. The main refrigeration equipment (20) is located outside (22) the nacelle and refrigerated with outside air. When the ambient temperature is too low, the main refrigeration system (20) stops working and the oil in the gearbox (10) heats up. Installing an auxiliary exchanger (30) inside (23) the nacelle and with no contact with the outside (22) prevents the gearbox (1) heating from exceeding the values at which the wind turbine switches to pause mode.

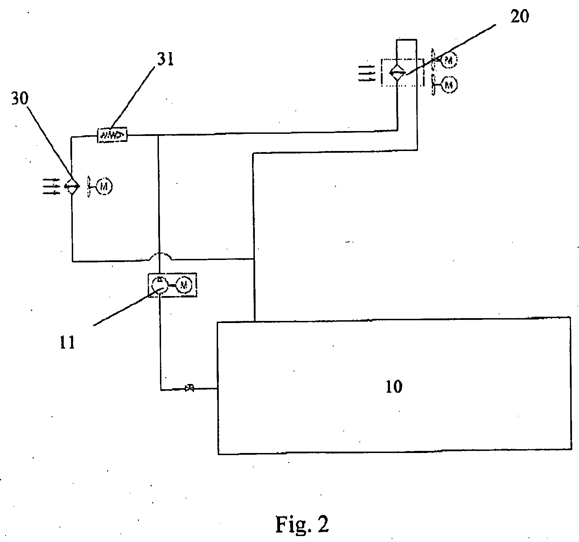

Figure 2 shows a hydraulic diagram which basically depicts the gearbox (10) and the main refrigeration equipment (20). The electrical pump (11) is activated when the gearbox oil needs to be refrigerated, and pumps the oil so that it flows through the refrigeration equipment (20). An auxiliary refrigeration system with a non-return limiting valve (31) is added to this conventional circuit. The auxiliary refrigeration system consists of the auxiliary exchanger (30) proper and an integrated motor fan (M) to force the air flow going through it. The motor fan (M) is connected to a control cabinet which activates or deactivates it based on the signals it receives from the external temperature sensors located at the outlet of the main refrigeration equipment (20) and on the gearbox (10) sump. According to this embodiment, when the oil reaches a given temperature T below the critical temperature, the motor fan (M) is activated, preventing the oil from reaching the critical temperature and the wind turbine from switching to pause mode.

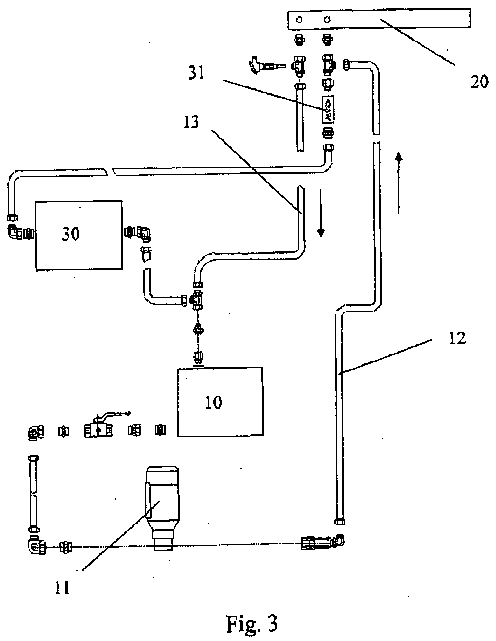

Figure 3 shows a diagram with the three elements and their mechanical connections and connectors. The motorpump (11) impels the oil outwardly (12) towards the main refrigeration equipment (20). From there, it returns (13) to the gearbox (10). If the main refrigeration equipment (20) is not working, the pressure limiting valve (31) causes the oil to flow through the auxiliary exchanger (30).

The auxiliary refrigeration system is controlled basically by means of two parameters: the refrigeration circuit through which the oil flows and the activation-deactivation of the electrical pump (11).

The circuit through which the oil flows is controlled automatically by the pressure limiting valve (31) located at the beginning of the auxiliary circuit, which is activated or deactivated by the control cabinet. When charge losses exceed a given pressure of 6 bar, this valve (31) opens and the oil flows through the auxiliary circuit. As soon as the value drops below that pressure, the valve closes and the oil once again flows through the main circuit. The activation pressure value is calculated based on the size of the gearbox and of the refrigeration circuit, and varies for different machine sizes.

The activation of the mechanical elements (motor fans) of both circuits depends on 3 parameters:
- External temperature Text.
- Oil temperature at the outlet of the main refrigeration equipment, Tsc.
- Oil temperature in the gearbox sump, Tm.

All of the temperature sensors are connected to the control cabinet, which controls the wind turbine's components.

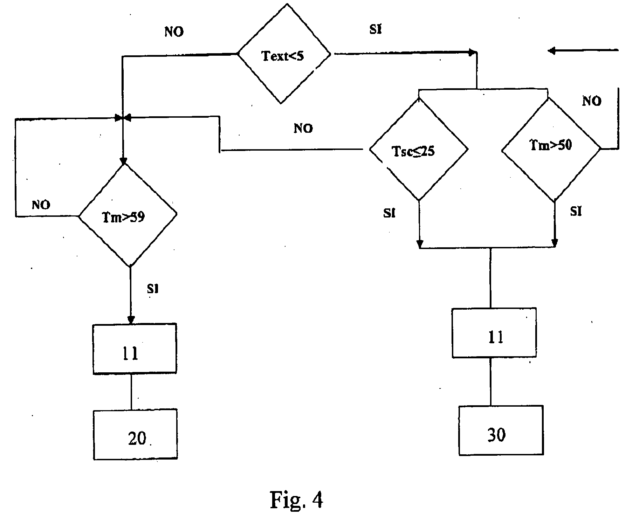

As shown in Figure 4, the low temperature system only activates for outside temperatures below T_{BT}=5°C. When this happens, the temperature (pressure or flow) is measured at the outlet of the main refrigeration equipment (20). This will indicate whether this refrigeration system is blocked when the temperature (pressure or flow) at the outlet of the main circuit Tsc, is equal to or less than 25°C which is the temperature of the oil whose viscosity is causing charge losses such that it cannot be impelled by the installed pump (or equal to zero in the case of pressure and flow) due to the low temperatures, and the auxiliary exchanger (30) is activated. The activation of this auxiliary exchanger (30) also depends on the measurement of the oil temperature in the gearbox sump, Tm, if Temperature Tm>50°C; the oil impelling electrical pump (11) and the auxiliary exchanger (30) are activated.

On the other hand, if the outside temperature Text exceeds T_{BT} (T_{BT}=5°C), activation of the main refrigeration system (20) will result from the gearbox temperature, Tm, if Temperature Tm>59°C.

Restoring refrigeration system operation following a machine stoppage can be a complex process. If the main refrigeration equipment (20) was blocked prior to the stoppage or viscosity is lost and it is blocked while it is stopped, it will remain blocked when the wind turbine is started up again. With auxiliary exchanger (30) of the invention, the gearbox (10) refrigeration requirements could be met from the moment the machine is restarted, since inside the nacelle it is protected from the low temperatures existing outside the wind turbine.

## Claims

1. Auxiliary refrigeration system of the type used to refrigerate a wind turbine's gearbox (10) when the main refrigeration equipment (20) is inoperative, being the auxiliary refrigeration system installed inside the nacelle with no contact with the outside, incorporating a pressure limiting valve (31) and being connected between the established outward (12) and return (13) paths from the gearbox (10) sump and regulated by a refrigerant impelling electrical pump (11), **characterized in that** the auxiliary refrigeration system is activated for outside temperatures below T_{BT}=5°C and when this condition is not the temperature at the outlet of the main circuit Tsc is measured, if this value, is equal to or less than 25°C, auxiliary exchanger (30) is activated.

2. Auxiliary refrigeration system according to claim 1, **characterized in that** it comprises an auxiliary exchanger (30) and a motor fan (M), all of them connected to a control cabinet that activates or deactivates the non-return pressure limiting valve (31).

3. Operating method for an auxiliary refrigeration system that controls the conventional circuit through which the refrigerant flows and the activation-deactivation of the electrical pump (11) that impels such refrigerant, **characterized in that** if the pressure in the valve (31) of the auxiliary exchanger (30) exceeds the allowable charge losses, the auxiliary exchanger circuit opens, and once a maximum temperature is exceeded in the gearbox Tm, being the maximum temperature of 50°C, the auxiliary exchanger (30) is switched on (30); based on the outside temperature Text, the logic regulating the auxiliary circuit or the main circuit is activated and likewise, if the measurements of the refrigerant temperature at the outlet of the main circuit Tsc, are equal to or less than a given temperature of 25°C, and the temperature at the outlet of the gearbox sump exceeds a given temperature setpoint (Tm>50°C), the electrical pump (11) and the auxiliary exchanger (30) are switched on.

4. Operating method for an auxiliary refrigeration system according to claim 3, **characterized in that** the pressure valve (31) starts operating upon reaching 6 bar.

5. Operating method for an auxiliary refrigeration system according to claim 3, **characterized in that** the electrical pump (11) and the auxiliary exchanger (30) are switched on if the outside temperature is below T_{BT} and the temperature (pressure or flow) at the outlet of the main circuit Tsc, is equal to or less than the temperature of the oil whose viscosity is causing charge losses such that it cannot be impelled by the installed pump (or equal to zero in the case of pressure and flow) and the gearbox temperature Tm, is greater than a safety value in order to prevent the oil from reaching a critical temperature.

## Patentansprüche

1. Zusatzkuhlsystem des verwendeten Typs zur Kühlung des Getriebes (10) einer Windenergieanlage, wenn die Hauptkühlausrüstung (20) nicht in Betrieb ist, wobei das Zusatzkühlsystem in der Gondel installiert ist und keinen Kontakt zur Außenseite hat, ein Druckbegrenzungsventil (31) besitzt und zwischen den Ausgangs- (12) und Rücklaufpfaden (13) des Sammelbehälters des Getriebes (10) angeschlossen ist, und durch eine elektrische Flügelradpumpe (11) für das Kühlmittel reguliert wird, **gekennzeichnet dadurch, dass** das Zusatzkühlsystem für Außentemperaturen unter TBT = 5 °C aktiviert wird, und wenn diese Bedingung erfüllt ist, die Temperatur am Auslass des Hauptkreises Tsc gemessen wird, und wenn dieser Wert kleiner oder gleich 25 °C ist, der Zusatzwärmetauscher (30) aktiviert wird.

2. Zusatzkühlsystem gemäß Anspruch 1, **gekennzeichnet dadurch, dass** es einen Zusatzwärmetauscher (30) und ein Motorgebläse (M) besitzt, die alle mit einem Steuerschrank verbunden sind, der das Druckbegrenzungsrückschlagventil (31) aktiviert oder deaktiviert.

3. Betriebsmethode für ein Zusatzkühlsystem, das den konventionellen Kreis steuert, durch den das Kühlmittel fließt, ebenso wie die Aktivierung/Deaktivierung der elektrischen Pumpe (11), die dieses Fühlmittel antreibt, **gekennzeichnet dadurch, dass** wenn der Druck im Ventil (31) des Zusatzwärmetauschers (30) die zulässigen Ladeverluste übersteigt, der Zusatzwärmetauscherkreis öffnet, und nachdem eine maximale Temperatur im Getriebe Tm überschritten ist, wobei die maximale Temperatur 50 °C beträgt, der Zusatzwärmetauscher (30) eingeschaltet wird (30); basierend auf der Außentemperatur Text wird die Logik für die Regulierung des Zusatzkreises oder des Hauptkreises aktiviert, und analog dazu, wenn die Messwerte der Kühlmitteltemperatur am Auslass des Hauptkreises Tsc gleich oder kleiner einer vorgegebenen Temperatur von 25 °C sind, und die Temperatur am Auslass des Getriebesammelbehälters einen vorgegebenen Temperatursollwert (Tm > 50 °C) überschreitet, werden die elektrische Pumpe (11) und der Zusatzwärmetauscher (30) eingeschaltet.

4. Betriebsmethode für ein Zusatzkühlsystem gemäß Anspruch 3, **gekennzeichnet dadurch, dass** das Druckventil (31) aktiviert wird, wenn 6 bar erreicht sind.

5. Betriebsmethode für ein Zusatzkühlsystem gemäß Anspruch 3, **gekennzeichnet dadurch, dass** die Elektropumpe (11) und der Zusatzwärmetauscher (30) eingeschaltet werden, wenn die Außentemperatur unter T_{BT} liegt und die Temperatur (Druck oder Strömung) am Ausgang des Hauptkreises Tsc kleiner oder gleich der Temperatur des Öls ist, dessen Viskosität Ladeverluste verursacht, sodass es von der installierten Pumpe nicht angetrieben werden kann (oder gleich null im Fall von Druck und Strömung), und die Getriebetemperatur Tm höher als ein Sicherheitswert ist, um zu verhindern, dass das Öl eine kritische Temperatur erreicht.

## Revendications

1. Système de refroidissement auxiliaire du type de ceux utilisés pour refroidir un multiplicateur d'éolienne (10) lorsque l'équipement principal de refroidissement (20) est inopérant, le système de refroidissement auxiliaire étant installé à l'intérieur de la nacelle sans aucun contact avec l'extérieur, incorporant une soupape de surpression (31) et étant connecté entre les voies aller (12) et retour (13) établies en provenance du puisard du multiplicateur (10) et régulé par une pompe électrique de refoulement de réfrigérant (11), **caractérisé en ce que** le système de refroidissement auxiliaire s'active en cas de températures extérieures au-dessous de TBT = 5 °C, et lorsque cette condition est vérifiée, la température à la sortie du circuit principal Tsc est mesurée, si cette valeur est inférieure ou égale à 25 °C, l'échangeur auxiliaire (30) s'active.

2. Un système de refroidissement auxiliaire conformément à la revendication 1, **caractérisé en ce qu'**il comprend un échangeur auxiliaire (30) et un motoventilateur (M), tous connectés à une armoire de commande qui active ou désactive la soupape de surpression de non-retour (31). +

3. Méthode de fonctionnement pour un système de refroidissement auxiliaire qui contrôle le circuit conventionnel à travers lequel s'écoule le réfrigérant et l'activation-désactivation de la pompe électrique (11) qui refoule ledit réfrigérant, **caractérisée en ce que** si la pression à l'intérieur de la soupape (31) de l'échangeur auxiliaire (30) dépasse les pertes de charge admises, le circuit de l'échangeur auxiliaire s'ouvre, et une fois qu'une température maximale est dépassée dans le multiplicateur Tm, la température maximale étant de 50 °C, l'échangeur auxiliaire (30) se met en marche (30) ; sur la base de la température extérieure Text, la logique qui régule le circuit auxiliaire ou le circuit principal est activée, et de même, si les mesures de la température du réfrigérant à la sortie du circuit principal Tsc sont inférieures ou égales à une température donnée de 25 °C, et que la température à la sortie du puisard du multiplicateur dépasse une valeur de consigne de température donnée (Tm > 50 °C), la pompe électrique (11) et l'échangeur auxiliaire (30) se mettent en marche.

4. Méthode de fonctionnement pour un système de refroidissement auxiliaire conformément à la revendication 3, **caractérisée en ce que** la soupape de pression (31) commence à fonctionner à partir de 6 bars.

5. Méthode de fonctionnement pour un système de refroidissement auxiliaire selon la revendication 3, **caractérisée en ce que** la pompe électrique (11) et l'échangeur auxiliaire (30) se mettent en marche si la température extérieure est inférieure à T_{BT} et la température (la pression ou le débit) à la sortie du circuit principal Tsc est inférieure ou égale à la température de l'huile dont la viscosité provoque de telles pertes de charge qu'elle ne peut pas être refoulée par la pompe installée (ou est égale à zéro dans le cas de la pression et du débit) et la température du multiplicateur Tm est supérieure à une valeur de sécurité afin d'empêcher l'huile d'atteindre une température critique.
